# EUROPEAN PATENT APPLICATION

(11) **EP 4 796 709 A1**
(43) Date of publication of application: **26.08.2026**
(21) Application number: 26160136.3
(22) Date of filing: 23.02.2026
(51) Int. Cl.: E01F 13/12, E01F 15/14

(54) **A VEHICLE KINETIC ENERGY ABSORBER**

(30) Priority: 25.02.2025 SE 2550170
(71) Applicant: Safe at Site AB, 832 56 Frösön (SE)
(72) Inventor: GRELSSON, Bert-Ola, 835 91 Krokom (SE)
(74) Representative: Bjerkén Hynell KB

(57) **Abstract**

The invention relates to a vehicle kinetic energy absorber (1) to be positioned on a road for stopping a vehicle (100), the vehicle kinetic energy absorber (1) comprising
- an impact member (10) adapted to directly receive vehicle impact,
- a pair of tube members (20) connected to the impact member (10),
- a pair of shear assemblies (30), each shear assembly being adapted to hold one tube member,
- a slidable base (40) configured to slide on the road upon vehicle impact, and
- a ballast body (50) arranged on the slidable base (40) and connected to the pair of shear assemblies (30),
whereby the vehicle kinetic energy absorber (1) is configured such that, upon vehicle impact, vehicle kinetic energy may be absorbed by
at least one tube member (20) being displaced along its longitudinal direction (X) and sheared by a shear assembly (30), and by
the slidable base (40) sliding on the road.

## Description

### TECHNICAL FIELD

The present invention generally pertains to safety barriers for roads, and in particular relates to a vehicle kinetic energy absorber to be positioned on a road for stopping a vehicle.

### BACKGROUND

There exist various solutions for temporarily closing off roads or lanes, in order to protect both road workers and drivers. By preventing unauthorized vehicle access to work zones, barriers and similar structures help reduce accident risks while also absorbing impact energy in case of a collision.

Several types of barriers and similar structures are known in the prior art, including tire barriers and fixed energy absorbers such as truck-mounted attenuators (TMA). The latter may be referred to as impact-attenuating devices.

To improve safety and reliability, standards such as the Swedish standard VVMB 351 have been introduced to set performance requirements for transverse safety barriers used in roadwork areas. Tire barriers are to be set up at a safety distance from the work site, the safety distance being dependent on the speed of the traffic.

Although existing solutions generally fulfil their intended purposes satisfactorily, there remains room for improvement, for example in terms of cost-efficiency and predictability.

### SUMMARY

A general object of the invention is to overcome the drawbacks of the prior art and to provide improvements in temporary safety barriers. Particular objectives include enhanced safety, ease of transport and deployment, and predictable performance at a low cost. Additionally, obstructing the visibility for drivers or road personnel should be avoided.

The invention is exemplified through the embodiments disclosed herein. In accordance with one aspect, the present disclosure provides a vehicle kinetic energy absorber to be positioned on a road for stopping a vehicle. The vehicle kinetic energy absorber comprises an impact member adapted to directly receive vehicle impact, a pair of tube members connected to the impact member, a pair of shear assemblies adapted to hold the pair of tube members, each shear assembly being adapted to hold one tube member. In use, the tube members may be substantially aligned with the horizontal, any may be substantially aligned with the expected impact direction of the vehicle. The vehicle kinetic energy absorber further comprises a slidable base configured to slide on the road upon vehicle impact, and a ballast body arranged on the slidable base and connected to the pair of shear assemblies. The vehicle kinetic energy absorber is configured such that, upon vehicle impact, vehicle kinetic energy may be absorbed by at least one tube member being displaced along its longitudinal direction and sheared by a shear assembly, and by the slidable base sliding on the road.

Thus, the vehicle kinetic energy absorber is adapted to slide on the road and may therefore be referred to as a slidable vehicle kinetic energy absorber. The vehicle kinetic energy absorber, hereinafter also referred to as absorber, is adapted to be free standing and thus not attached to another structure such as a heavy vehicle, e.g. a truck. It is further not required to secure the absorber to the ground.

The ballast body may typically comprise or consist of concrete. The ballast body may be of a sufficient weight, or mass, to ensure that a tube member is sheared by a shear assembly upon vehicle impact. In addition, the weight of the ballast body will result in high absorption of kinetic energy, as kinetic energy is required to accelerate the ballast body, and as the ballast body will increase the frictional forces between the absorber and the road.

Advantages of the present absorber include ensuring a relatively short stopping distance for an impacting vehicle. Furthermore, the stopping distance may be predictable, depending of course on the vehicle speed upon impact into account. The absorber is also easy to transport and deploy as compared e.g. to prior art solutions in the present or related art, such as tire barriers or truck-mounted attenuators (TMA). Moreover, no assembly or installation at the site is require. A further advantage is that visibility is not impaired, as the absorber may be relatively compact and have a height below the line of sight of a passenger vehicle driver. The absorber may have a height lower than 1 metre.

Typically, a plurality of absorbers, such as two to five absorbers, may be stacked on top of one another and transported to a site. A transport vehicle, such as a truck, may carry a plurality of absorbers, such as more than ten absorbers. The absorber may be approximately 2-3 metres wide and 2-3 metres long, the width measured across a road and the length measured along the road. Typically, a number of absorbers may be positioned side by side on a road or lane to be closed off.

The present absorber may efficiently absorb vehicle kinetic energy in several steps, where a first step or steps involve internal deformation of the absorber, followed by a subsequent step where the absorber slides along the road while encountering friction. Importantly, the present absorber may meet the Swedish standard VVMB 351.

Optionally, the slidable base is of a height lower than 150 millimetres. The impact member may be positioned higher than 150 millimetres from the road. This configuration may allow a vehicle to directly impact the impact member but not directly impact the slidable base. Thereby, the vehicle kinetic energy is introduced into the absorber via the impact member, such that the absorber may absorb the vehicle kinetic energy as intended. In other words, in contrast to the impact member, the slidable base may be adapted not to receive direct vehicle impact. The portion of the slidable base that extends below the impact member may have a height less than 150 millimetres.

Typically, the footprint of the slidable base is essentially equal to the footprint of the absorber, such that the slidable base may provide a stable support for the absorber.

Optionally, the slidable base comprises road supports that are configured to support the vehicle kinetic energy absorber. The road supports may be designed to slide on the road. As a result of frictional forces between the road supports and the road, the slidable base and thus the absorber will be decelerated as it slides along the road.

Typically, the road supports are disposed to stably support the absorber on the road. For example, there may be one road support arranged in each corner of the slidable base. Looking at the absorber footprint, there may be one road support in each corner of the absorber. In addition, there may be several road supports positioned beneath heavy components of the absorber, such as beneath the ballast body. The slidable base may comprise 6 to 18 road supports, or 8 to 14 road supports. In one embodiment, the number of road supports may be 12.

Optionally, the slidable base comprises a frame structure formed of interconnected bars or profiles, preferably of metal such as steel. The frame structure may comprise a truss structure. The slidable base is preferably of sufficient structural strength such that it does not deform upon vehicle impact. For example, the truss structure may comprise four longitudinal truss members that extend along the length of the slidable base. The truss structure may comprise three or four transverse truss members.

Optionally, the absorber comprises brake elements configured to counteract, or brake, the absorber sliding on the road. Examples of brake elements are friction elements or ripper elements. The friction elements may be configured to cause frictional forces to efficiently brake the absorber. Typically, the friction elements may be consumed, i.e. worn down, as the absorber slides along the road. The ripper elements may be configured to rip the road to thereby efficiently decelerate the absorber as it slides along the road. The ripper elements may be particularly efficient on slippery roads, e.g. icy roads. By means of the brake elements, the absorber may be configured to slide on the road, and may also be configured to efficiently brake the sliding movement to thereby efficiently absorb vehicle kinetic energy. Optionally, at least some of the road supports comprise a brake element. The brake elements may constitute the road supports. The absorber, e.g. its road supports, may be configured such that the brake elements may be exchanged or replaced. Thereby, worn down friction elements may be exchanged for new ones, and the absorber may selectively be fitted with appropriate brake elements (friction or ripper) for particular conditions. The absorber may be fitted with some friction elements and some ripper elements at the same time.

Optionally, the vehicle kinetic energy absorber comprises a displaceable body that is arranged on the slidable base and is displaceable relative to the ballast body. The pair of shear assemblies may be attached to the displaceable body. Thereby, kinetic energy may be absorbed by the displaceable body being displaced relative to the ballast body. Kinetic energy may be absorbed by frictional forces between the displaceable body and the slidable base. The displaceable body may comprise, or consist of, metal elements.

Optionally, the displaceable body has a significant weight, or mass, and therefore forms an inertia body. Thereby, a significant amount of kinetic energy may be absorbed by the displaceable body being displaced relative to the ballast body. Significant kinetic energy may be absorbed by an acceleration of the displaceable body. The displaceable body may for examples have a weight of 50 to 500 kilograms. Preferably, the weight may be between 200 to 400 kilograms. Such a displaceable body may comprise, or consist of, metal elements and concrete. Typically, such a displaceable body may consist of concrete. A displaceable body of a significant weight will also contribute to the total weight of the absorber, which increases frictional forces as the absorber slides along the road.

Optionally, the weight of the ballast body is 2 to 10 times the weight of the displaceable body. Preferably, the ballast body weight may be 2.5 to 5 times the weight of the displaceable body. The ballast body may thus also be referred to as an inertia body. The displaceable body may be referred to as an auxiliary inertia body and the ballast body may be referred to as a main inertia body. Due to the difference in weight, the displaceable body will typically move towards the ballast body during one step of kinetic energy absorption, while the ballast body and the entire absorber will slide along the road during a subsequent step of kinetic energy absorption.

Optionally, the vehicle kinetic energy absorber comprises a second pair of tube members connected to the displaceable body. The absorber may also comprise a second pair of shear assemblies attached to the ballast body and adapted to hold the second pair of tube members. Kinetic energy may be absorbed by the second pair of tube members being sheared by the second pair of shear assemblies. Such an absorber may efficiently absorb vehicle kinetic energy in a two-step deformation process. The two-step deformation may be followed by a subsequent step of kinetic energy absorption resulting from the absorber sliding along the road.

Optionally, the vehicle kinetic energy absorber comprises two pairs of tube members connected to the impact member. It may further comprise two pairs of shear assemblies adapted to hold the two pairs of tube members and attached to the displaceable body. Each one of the tube members and associated shear assemblies may be arranged in the same horizontal plane. Such an absorber may be compact, and the vehicle kinetic energy may be absorbed while the absorber is deformed in a predetermined manner. All tube members and shear assemblies of the absorber may be of a same or at least similar design, which results in a cost-effective solution.

Optionally, the absorber is configured for stacking. In other words, the absorber may be configured such that a number of absorbers may be stacked on one another e.g. for storage and transport. For this reason, the absorber may comprise a number of stack brackets. For example, stack brackets may extend upwards from the ballast body. In addition, stack brackets may extend upwards from the displaceable body. By "upwards" is here meant upwards from an absorber when arranged on an essentially horizontal plane. The absorber may comprise 4 to 8 stack brackets, the number of stack brackets may be 4.

Optionally, each tube member comprises a tube wall, and each shear assembly comprises a tube guide for guiding the tube member and a shear member adapted to extend through the tube guide and to shear the tube wall when kinetic energy is absorbed by the tube member being sheared by the shear assembly. Such a solution may be particularly cost-effective and involve the use of standard components. Further, the shear member may serve to hold the absorber together and in addition shear the tube member. The shear member may be a readily available bolt.

Optionally, the tube wall comprises a plurality of through-holes distributed along a longitudinal direction of the tube member, and the shear member is adapted to shear the tube wall along the plurality of through-holes.

Optionally, at least a majority of the through-holes have a non-circular shape and are configured to direct the shear member from one through-hole to a neighbouring through-hole when the shear member shears the tube wall. Such a solution may be reliable and provide a predictable absorption of vehicle kinetic energy.

Optionally, the non-circular through-holes are shaped as acute isosceles triangles that are aligned with the longitudinal direction of the tube member. Optionally, a separation distance between the non-circular through-holes, shaped as acute isosceles triangles, is 15 to 40 percent of the height of the non-circular through-holes in the longitudinal direction. Such a design has proven reliable and predictable.

Optionally, the vehicle kinetic energy absorber comprises a front end at which the impact member is arranged and a rear end at which the ballast body is arranged. The ballast body may be elongated and may extend laterally across the vehicle kinetic energy absorber. The vehicle kinetic energy absorber may comprise a battery enclosure for enclosing an electric battery. The ballast body may comprise a battery recess at one of its lateral ends for accommodating at least a portion of the battery enclosure. The recess may provide for arranging the battery enclosure on the absorber while avoiding the battery enclosure from protruding from the absorber. Thereby, a relatively compact absorber may be obtained. The absorber may be configured to be stacked on top of another absorber, and the battery recess may allow for the battery enclosure not protruding above stack brackets of the absorber. The battery enclosure may advantageously serve as a stack bracket. Typically, the battery recess may be arranged at a lateral side of the absorber that is furthest from traffic, such that the battery can be exchanged at lower risk for a person who changes the battery. To account for various applications, the ballast body may comprise a battery recess at each one of its lateral ends.

It is to be apprehended that the battery enclosure and the battery recess described herein may be implemented in vehicle kinetic energy absorbers that do not comprise the tube members and shear assemblies described herein. Thus, in accordance with another aspect, the present disclosure provides a vehicle kinetic energy absorber to be positioned on a road for stopping a vehicle, the vehicle kinetic energy absorber comprising an impact member adapted to directly receive vehicle impact, a slidable base configured to slide on the road upon vehicle impact, and a ballast body arranged on the slidable base, whereby the vehicle kinetic energy absorber is configured such that, upon vehicle impact, vehicle kinetic energy may be absorbed by the slidable base sliding on the road. The absorber comprising a front end at which the impact member is arranged, and a rear end at which the ballast body is arranged, wherein the ballast body is elongated and extends laterally across the vehicle kinetic energy absorber. The vehicle kinetic energy absorber may comprise a battery enclosure for enclosing an electric battery, and the ballast body may comprise a battery recess at one of its lateral ends for accommodating at least a portion of the battery enclosure. In accordance with a general aspect, the battery enclosure and the battery recess may be omitted.

Further advantages and associated advantageous features of the invention are disclosed in the following description and defined in the dependent claims.

### DESCRIPTION OF THE DRAWINGS

Below embodiments of the invention will be described with reference to the drawings, in which
- figure 1 shows a vehicle kinetic energy absorber,
- figure 2 shows the vehicle kinetic energy absorber of figure 1 from below
- figure 3 is an exploded view of the vehicle kinetic energy absorber of figures 1 and 2,
- figure 4 shows an alternative example of the vehicle kinetic energy absorber of the previous figures with fewer internal deformable members.
- figure 5 is an enlarged view of a tube member and a shear assembly of the vehicle kinetic energy absorber, and
- figures 6a to 6f illustrate an actual test in which a vehicle impacts the vehicle kinetic energy absorber of figures 1 to 3.

### DETAILED DESCRIPTION OF EMBODIMENTS

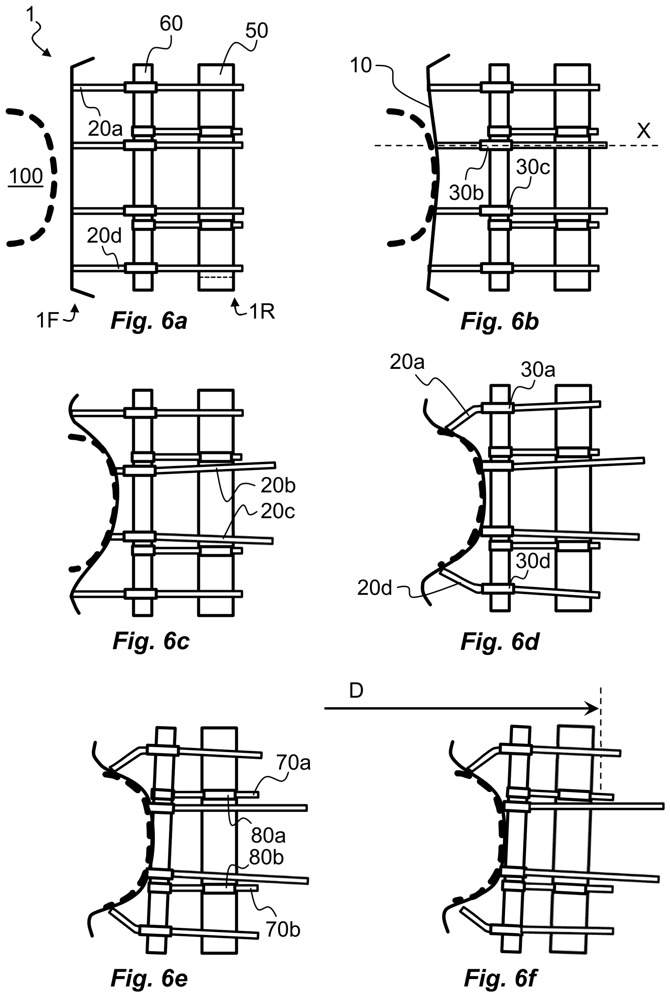

Referring to the figures, the present disclosure presents a vehicle kinetic energy absorber 1 for positioning on a road to stop a vehicle 100. Figures 6a to 6f illustrate the vehicle kinetic energy absorber 1 placed on a road and a vehicle 10 crashing into the vehicle kinetic energy absorber 1. A general inventive concept of the present disclosure is to provide a freestanding vehicle kinetic energy absorber configured to absorb vehicle kinetic energy in an internal plastic deformation phase or step and in a sliding friction phase or step. The sliding friction step may be a subsequent step, occurring after the internal plastic deformation step. The internal plastic deformation step may comprise a plurality of internal plastic deformation steps.

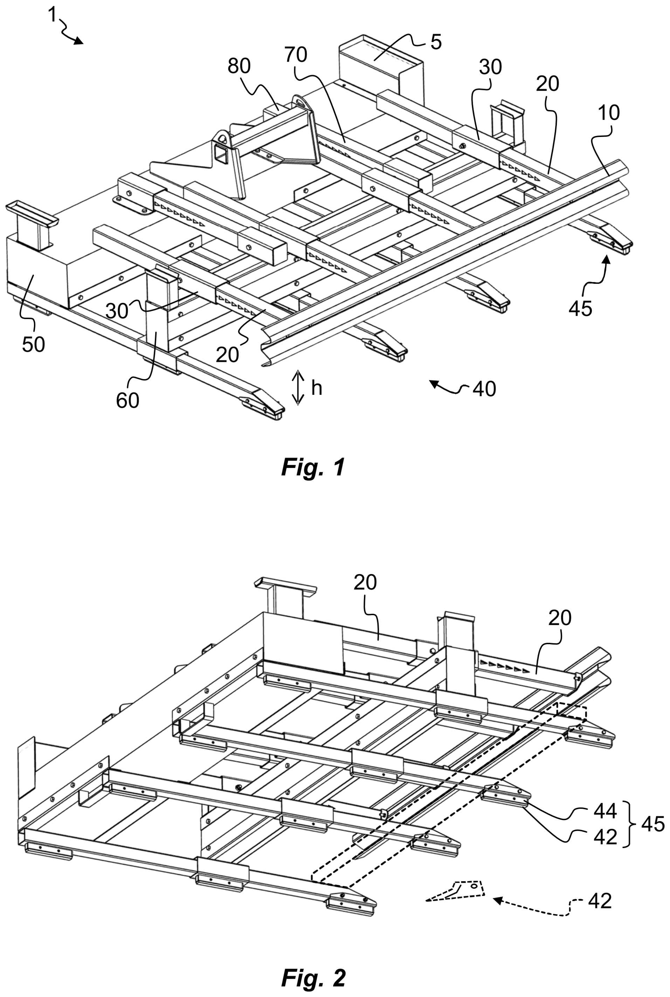

The vehicle kinetic energy absorber 1, or absorber 1, comprises an impact member 10 adapted to directly receive vehicle impact. One example of the impact member 10 is best shown in figures 1 to 4, where the impact member is embodied as an elongated profile of stamped metal sheet. The impact member 10 may be provided with undepicted markings or signs, or retroreflective coating. The strength of the impact member 10 may be customised to tailor the internal deformation of the absorber 1 upon vehicle impact.

A pair of tube members 20 are connected to the impact member 10. The tube members may be secured, e.g. bolted or welded, to the impact member. In the example of figures 1,2, 3 and 6, two pairs of tube members 20 are connected to the impact member 10. The vehicle kinetic energy absorber 1 further comprises a pair (or two pairs) of shear assemblies 30 adapted to hold the pair of tube members 20. Each shear assembly of the pair of shear assemblies 30 is adapted to hold one tube member of the pair of tube members 20, as shown.

A slidable base 40 is configured to slide on the road upon vehicle impact. A ballast body 50 that by its weight efficiently decelerates the sliding of the slidable base 40 is arranged on the slidable base 40 and connected to the pair of shear assemblies 30.

Referring in particular to figure 1 and 6 (more precisely, figures 6a to 6f) together, the vehicle kinetic energy absorber 1 is configured such that, upon vehicle impact, vehicle kinetic energy may be absorbed by at least one tube member 20 being displaced along its longitudinal direction X and thereby being sheared by a shear assembly 30. In addition, vehicle kinetic energy may be absorbed by the slidable base 40 and thus the absorber 1 sliding on the road. The arrow in figure 6f illustrates that the absorber 1 has slid a distance D on the road together with the vehicle 100 that has been stopped.

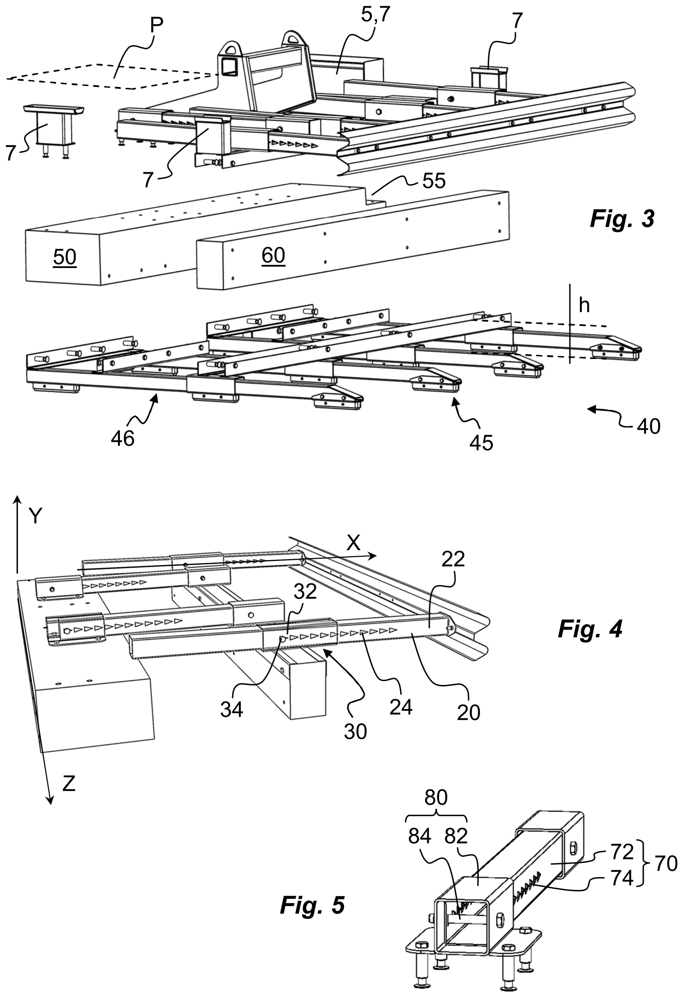

As is indicated in figures 1 and 3, the slidable base 40 may be of a height lower than 150 millimetres, and the impact member 10 may be positioned higher than 150 millimetres from the road. Thereby, a typical vehicle 100 will directly impact the impact member 10 but not directly impact the slidable base 40. As is also clear from the figures, the slidable base 40 is adapted not to receive direct vehicle impact as it is of a low height at least where it extends below the impact member 10. At least in the area of the impact member 10, the height of the slidable base 40 may be less than 150 millimetres. Thereby, an impacting vehicle, typically its front bumper, will pass above the slidable base 40. Referring also to figure 6, as the absorber deforms, the vehicle 100 still moves vertically above the slidable base and not in direct contact therewith. By "in the area of the impact member 10" may be meant the area, as seen from above, covered by the impact member 10 from initial vehicle impact until full deformation of the impact member 10 and the entire absorber 1.

The slidable base 40 may, as shown, comprise feet or road supports 45 that are configured to support the vehicle kinetic energy absorber 1 and to slide on the road. It is to be apprehended that should the slidable base 40 lack such road supports 45, the absorber may still function satisfactorily. However, the road supports 45 may provide a more predictable function and allow for customisation and the exchange of worn parts.

Moreover, the absorber 1 may comprise brake elements 42 as denoted in figure 2. The brake elements 42 may be in the form of friction elements adapted to abrade against the road. The friction elements may be polymer elements such as rubber. In the embodiment of figure 2, the brake elements are rubber blocks. Alternatively, the brake elements 42 may be ripper elements adapted to engage the road. An exemplary ripper element is illustrated in dashed lines in figure 2, essentially having the form of a claw. The ripper element may be adapted to engage the road and tear a surface of the road. In other words, the ripper element may cut the road. Thus, the brake elements 42 are configured to counteract the sliding motion of absorber 1 on the road. A brake element 42 may be part of a road support 45 or may itself form the road support 45.

The vehicle kinetic energy absorber 1 may comprise at least three tube members 20 and at least three associated shear assemblies 30, each tube member 20 being connected to the impact member 10. Typically, the three tube members may extend at least substantially in parallel. Typically, in use, the tube members extend horizontally. Moreover, the tube members may extend spaced apart from one another, typically uniformly spaced apart. The tube members may extend substantially orthogonal to the impact member 10. No matter if there are two (figure 4), three (undepicted), or four (figure 1) such tube members 20, their alignment and orientation will be as described in this paragraph and illustrated in the drawings. Notably, a deviation of up to a few degrees may be acceptable. Thus, the tube members need not extend exactly in parallel, not exactly horizontally and not exactly uniformly spaced apart.

The pair of tube members 20 can be said to comprise a first tube member and a second tube member. These may be denoted 20a and 20b. If the number of tube members 20 is greater, the denotation 20a, 20b, 20c, 20d and so on may be applied. Similarly, the pair of shear assemblies 30 may comprise a first shear assembly 30a, a second shear assembly 30b, a third shear assembly 30c and so on.

In some examples, the impact member 10, the tube members 20, and the associated shear assemblies 30 are configured such that, upon vehicle impact, at least one tube member 20 is sheared by a shear assembly 30 and at least one other tube member 20 is bent. The behaviour of the tube members upon impact is affected inter alia by the strength of the impact member 10. Figures 6d to 6f demonstrate that the impact member 10 has been bent as a result of vehicle impact and thereby the laterally outer tube members 20a, 20d have been bent while the laterally inner tube members 20b, 20c have been sheared by the associated shear assemblies.

In some detail, the embodiment of figure 6, and figures 1 to 3, comprises four tube members that may jointly be denoted 20, or individually be denoted 20a, 20b, 20c, 20d (figure 6). The two laterally outer tube members 20a, 20d may be referred to as a laterally outer pair of tube members while the two laterally inner tube members 20b, 20c may be referred to as a laterally inner pair of tube members.

In the present examples, the vehicle kinetic energy absorber 1 comprises a displaceable body 60 that is arranged on the slidable base 40 and is displaceable relative to the ballast body 50. The pair of shear assemblies 30 are attached to the displaceable body 60, whereby kinetic energy may be absorbed by the displaceable body 60 being displaced relative to the ballast body 50, as is apprehended from figure 6. As shown, the shear assemblies 30 may be bolted to the displaceable body 60. In the illustrated example, the displaceable body 60 is a concrete block with bore holes for screwing the shear assemblies 30 thereto.

In the present examples, the displaceable body 60 has a significant weight such that a significant kinetic energy is absorbed by the displaceable body 60 being displaced relative to the ballast body 50. The displaceable body 60 therefore acts as, and may be referred to as, an inertia body. Typically, the displaceable body 60 has a weight of 50 to 500 kilograms, or preferably 200 to 400 kilograms. Typically, the weight of the ballast body 50 is 2 to 10 times, or preferably 2.5 to 5 times, the weight of the displaceable body 60.

As is shown, the present vehicle kinetic energy absorber 1 comprises a second pair of tube members 70 connected to the displaceable body 60, and a second pair of shear assemblies 80 attached, e.g. screwed, to the ballast body 50 and adapted to hold the second pair of tube members 70. Kinetic energy may be absorbed by the second pair of tube members 70 being sheared by the second pair of shear assemblies 80.

To improve the readability of the present disclosure, the initially described pair of tube members 20 and pair of shear assemblies 30 may be referred to as the front pair of tube members 20 and shear assemblies 30. The second pair of tube members 70 and shear assemblies 80 may be referred to as the rear pair of tube members 70 and shear assemblies 80. As is shown, the front pair(s) of tube members 20 (20a-d in figure 6) extend from a front end that is connected the impact member 10 to a rear end that rests on the ballast body 50.

In some examples, see figures 1 to 3 and 6, the vehicle kinetic energy absorber 1 comprises two pairs of front tube members 20 connected to the impact member 10, and two pairs of front shear assemblies 30 adapted to hold the two pairs of tube members 20 and attached to the displaceable body 60. Each one of the tube members 20 and associated shear assemblies 30 may be arranged in the same horizontal plane P (indicated in figure 3). Thus, for example, the number of front tube members 20 and front shear assemblies 30 may be four. The number of rear tube members 70 and rear shear assemblies 80 may be two. Bearing in mind that the rear tube members 70 may be sheared simultaneously with the displaceable body 60 being accelerated and displaced against frictional forces toward the ballast body 50, a lower number of rear tube members 70, as compared to front tube members 20, may suffice. The disclosure does not exclude there being more than two rear tube members 70 and associated rear shear assemblies 80 being foreseen, for example if the displaceable body 60 is light weight.

Turning now to an exemplary design of the tube members, as is best shown in figures 4 and 5, each tube member 20, 70 may comprise a tube wall 22, 72, and each shear assembly 30, 80 may comprise a tube guide 32, 82 for guiding the tube member 20, 70. Further, there may be a shear member 34, 84 adapted to extend through the tube guide 32, 82 and to shear the tube wall 22, 72 when kinetic energy is absorbed by the tube member 20, 70 being sheared by the shear assembly 30, 80. As illustrated, the tube members 20, 70 and the shear assemblies 30, 80 may be tubes of e.g. quadratic cross-section. Such a cross-section may facilitate manufacture and assembly, although other cross-sections, such as circular or polygonal, are also conceivable.

As is shown, the tube wall 22 may comprise a plurality of through-holes 24 distributed along a longitudinal direction X of the tube member 20, and the shear member 34 may be adapted to shear the tube wall 22 along the plurality of through-holes 24. Figure 5 illustrates the shear member 34 as a bolt that is secured by a nut. Depending on the selection (dimension, material, thickness) of tubes for the tube members and the shear assemblies, bolts of 16 to 20 millimetres diameter, typically 18 millimetres diameter, may be suitable.

Referring again in particular to figures 4 and 5, at least a majority, in the present examples all, of the through-holes 24 have a non-circular shape. Thereby, the through-holes 24 are configured to direct the shear member 34 from one through-hole 24 to a neighbouring through-hole 24 when the shear member 34 shears the tube wall 22. In other words, the shearing movement of the shear member 34, here the bolt, follows the line of adjacent through-holes 24. Tests have revealed that non-circular through-holes 24 shaped as acute isosceles triangles that are aligned with the longitudinal direction X of the tube member 20, 70 are particularly effective. Moreover, a suitable separation distance between the non-circular through-holes 24, shaped as acute isosceles triangles, is 15 to 40 percent of the height of the non-circular through-holes 24 in the longitudinal direction X.

In the example of figure 4, the number of front and rear tube members and shear assemblies is equal. There number of front tube members 20 (and shear assemblies 30) is two and the number of rear tube members 70 and shear assemblies (80) is two. The number of front tube members (and shear assemblies) may be two, three, four five or six. The number of rear tube members (and shear assemblies) may be two, three, four five or six. Typically, but not always, the number of rear tube members (and shear assemblies) exceeds the number of front tube members (and shear assemblies).

As is denoted in figure 6a, the vehicle kinetic energy absorber 1 comprises a front end 1F at which the impact member 10 is arranged, and a rear end 1R at which the ballast body 50 is arranged. The ballast body 50 is typically elongated and extends laterally across the vehicle kinetic energy absorber 1. Referring to figures 1 and 3, the vehicle kinetic energy absorber 1 may comprise a battery enclosure 5 for enclosing an electric battery, and the ballast body 50 may comprise a battery recess 55 at one of its lateral ends for accommodating at least a portion of the battery enclosure 5. Even though not shown in detail, the battery enclosure 5 is preferably lockable such that the battery is secured. The battery typically powers lights and other possible equipment on the absorber 1, and typically needs to be regularly charged or exchanged. The absorber may comprise a number of stack brackets 7, denoted in figure 3. The battery enclosure may serve as a stack bracket.

Figure 6a illustrates in view from above an absorber 1 positioned on a road and the front of a vehicle 100 approaching the absorber from the left. To simplify the understanding, the absorber 1 is illustrated with only some of its parts, as compared e.g. to the more detailed figure 1.

In figure 6b, the vehicle has impacted the impact member 10 of the absorber 1 and the absorption of kinetic energy has been initialised by the impact member being deformed, more precisely slightly bent inwards toward the absorber 1. As is illustrated the laterally inner pair of (front) tube members 20b, 20c have been pushed by the impact member 10 along their axial or longitudinal direction X. During this movement, the tube members have been sheared by their respective laterally inner (front) shear assembly 30b, 30c, thereby also absorbing kinetic energy.

In figure 6c the impact member 10 has been further deformed, and in addition the laterally inner pair of tube members 20b, 20c has been pushed further through the laterally inner shear assembly 30b, 30c. As is illustrated, the laterally inner pair of tube members 20b, 20c is during operation pushed from the front end 1F och the absorber 1 such that it protrudes out from the rear end 1R of the absorber 1. Moreover, in this example, the shearing of the laterally inner tube members 20b, 20c has led to a deformation of the tube members and/or the shear assemblies, such that the tube members are no longer aligned with their original respective longitudinal direction X.

The deformation of the laterally inner pair of tube members 20b, 20c has been completed in in figure 6d. As is shown, the impact member 10 is now in contact with the displaceable body 60. The length of the respective laterally inner pair of tube members 20b, 20c that is available for deformation by shearing is consumed. The figure also shows how the laterally outer pair of tube members 20a, 20d have been bent laterally inward toward the centre of the absorber 1.

As it to be apprehended, if the strength of the impact member 10 had been higher, then the laterally outer pair of tube members 20a, 20d would have been less likely to bend and instead more likely to have travelled axially through their respective associated shear assembly 30a, 30d, in the same manner as the laterally inner pair of tube members 20b, 20c. Other factors that affect how the tube members 20a-d behave upon impact is the number of tube members and how they are disposed on the absorber 1. In the example of figure 6, the four front tube members 20a-d are equidistantly disposed along the impact member. The laterally outer pair of tube members 20a, 20d are disposed close to the respective end of the impact member 10.

As is further to be apprehended, should a vehicle 100 not impact the absorber 1 centrally, as illustrated, but instead, in an undepicted scenario, impact the absorber 1 off-centre i.e. at an end of the impact member 10, then the one or two tube members closest to the vehicle impact would likely have been sheared, while the remaining tube members would have been bent. It is believed that the present design, that typically involves some tube members being sheared and others bent, results in a safe and predictable deceleration of the vehicle 100, while ensuring efficient use of materials.

In figure 6e, the movement of the displaceable member 60 relative to the ballast member 50 has been initiated. As compared to figure 6d, the displaceable member 60 is now closer to the ballast member 50. Moreover, due to some characteristics of the vehicle, imperfections of the absorber 1, or chance, the displaceable member 60 has rotated approximately one degree clockwise. The movement of the displaceable member 60 has involved absorption of vehicle kinetic energy. In addition, the pair of rear tube members 70a, 70b has been pushed by the displaceable member 10 along their longitudinal direction X. During this movement, the tube members 70a, 70b have been sheared by their respective rear shear assembly 80b, 80c, thereby also absorbing kinetic energy.

Finally, in figure 6f the vehicle and the absorber have been brought to stand still. The arrow D illustrates that the absorber has slid along the road as a result of the vehicle impact.

Depending on the speed of the vehicle, the absorber may typically slide from a few metres to up to 100 metres. Thus, the present disclosure involves converting vehicle kinetic energy into work for deforming and for moving the absorber. The present absorber allows the absorption of vehicle kinetic energy in a multi-step deformation process followed by a translational step.

Illustrated in dashed lines in figure 2 is an optional front transverse truss member of the slidable base 40. In some cases, the front end 1F of the absorber 1 may rise as the absorber 1 receives a vehicle impact. A front transverse truss member may, in such instances, prevent a longitudinal truss member (four in the present examples) from undesirably making contact with the underbody of the vehicle.

It is to be understood that the invention is not limited to the particular embodiments and examples illustrated in the drawings and described herein; rather, the invention encompasses all modifications and variations within the scope of the appended claims. Nevertheless, especially figures 1, 2 and 5 illustrate a possible actual implementation of the invention and are not to be understood as merely schematic representations.

## Claims

1. A vehicle kinetic energy absorber (1) to be positioned on a road for stopping a vehicle (100), the vehicle kinetic energy absorber (1) comprising
- an impact member (10) adapted to directly receive vehicle impact,
- a pair of tube members (20) connected to the impact member (10),
- a pair of shear assemblies (30), each shear assembly being adapted to hold one tube member,
- a slidable base (40) configured to slide on the road upon vehicle impact, and
- a ballast body (50) arranged on the slidable base (40) and connected to the pair of shear assemblies (30),
whereby the vehicle kinetic energy absorber (1) is configured such that, upon vehicle impact, vehicle kinetic energy may be absorbed by
at least one tube member (20) being displaced along its longitudinal direction (X) and sheared by a shear assembly (30), and by
the slidable base (40) sliding on the road.

2. The vehicle kinetic energy absorber of claim 1, wherein, the slidable base (40) is adapted not to receive direct vehicle impact, the portion of the slidable base (40) that extends below the impact member (10) having a height less than 150 millimetres.

3. The vehicle kinetic energy absorber of claim 1 or 2, wherein the slidable base (40) comprises road supports (45) that are configured to support the vehicle kinetic energy absorber (1) and to slide on the road.

4. The vehicle kinetic energy absorber of any preceding claim, comprising brake elements (42), in the form of friction elements adapted to abrade against the road or ripper elements adapted to engage the road, wherein the brake elements (42) are configured to counteract the vehicle kinetic energy absorber (1) sliding on the road.

5. The vehicle kinetic energy absorber of any preceding claim, comprising at least three tube members (20) and at least three associated shear assemblies (30), each tube member (20) being connected to the impact member (10), the three tube members (20) extending substantially in parallel, spaced apart, and substantially orthogonal to the impact member (10).

6. The vehicle kinetic energy absorber of claim 5, wherein the impact member (10) and the tube members (20) and associated shear assemblies (30) are configured such that, upon vehicle impact, the impact member (10) is bent such that at least one tube member (20) is sheared by a shear assembly (30) and at least one other tube member (20) is bent.

7. The vehicle kinetic energy absorber of any preceding claim, comprising
- a displaceable body (60) that is arranged on the slidable base (40) and displaceable relative to the ballast body (50),
wherein the pair of shear assemblies (30) are attached to the displaceable body (60),
whereby kinetic energy may be absorbed by the displaceable body (60) being displaced relative to the ballast body (50).

8. The vehicle kinetic energy absorber of claim 7, wherein the displaceable body (60) is an inertia body with a significant weight, for example 50 to 500 kilograms, such that a significant amount of kinetic energy is absorbed by the displaceable body (60) being displaced relative to the ballast body (50).

9. The vehicle kinetic energy absorber of claim 7 or 8, wherein the displaceable body (60) has a weight of 50 to 500 kilograms, or preferably 200 to 400 kilograms.

10. The vehicle kinetic energy absorber according to any of claims 7 to 9, wherein the weight of the ballast body (50) is 2 to 10 times, or preferably 2.5 to 5 times, the weight of the displaceable body (60).

11. The vehicle kinetic energy absorber according to any of claims 7 to 10, comprising
- a second pair of tube members (70) connected to the displaceable body (60), and
- a second pair of shear assemblies (80) attached to the ballast body (50) and adapted to hold the second pair of tube members (70),
whereby kinetic energy may be absorbed by the second pair of tube members (70) being sheared by the second pair of shear assemblies (80).

12. The vehicle kinetic energy absorber of claim 11, comprising
two pairs of tube members (20) connected to the impact member (10), and
two pairs of shear assemblies (30) adapted to hold the two pairs of tube members (20) and attached to the displaceable body (60),
wherein each one of the tube members (20, 70) and associated shear assemblies (30, 80) are arranged in the same horizontal plane (P).

13. The vehicle kinetic energy absorber of any preceding claim, wherein each tube member (20) comprises a tube wall (22), and wherein each shear assembly (30) comprises a tube guide (32) for guiding the tube member (20) and a shear member (34) adapted to extend through the tube guide (32) and to shear the tube wall (22) when kinetic energy is absorbed by the tube member (20) being sheared by the shear assembly (30).

14. The vehicle kinetic energy absorber of claim 13, wherein the tube wall (22) comprises a plurality of through-holes (24) distributed along a longitudinal direction (X) of the tube member (20), and the shear member (34) is adapted to shear the tube wall (22) along the plurality of through-holes (24).

15. The vehicle kinetic energy absorber of claim 14, wherein at least a majority of the through-holes (24) have a non-circular shape and are configured to direct the shear member (34) from one through-hole (24) to a neighbouring through-hole (24) when the shear member (34) shears the tube wall (22).
